# FASCICULE DE BREVET EUROPEEN

(11) **EP 2 600 123 B1**
(45) Date de publication et mention de la délivrance du brevet: **05.09.2018**
(21) Numéro de dépôt: 11306598.1
(22) Date de dépôt: 01.12.2011
(51) Int. Cl.: G01F 15/00

(54) **Compteur de fluide en particulier d'eau**
Flüssigkeitszähler, insbesondere für Wasser
Fluid meter, in particular of water

(43) Date de publication de la demande: 05.06.2013
(73) Titulaire: Itron Global SARL, Liberty Lake WA 99019 (US)
(72) Inventeur: RENOUD, Anthony, 01290 SAINT ANDRE D'HUIRIAT (FR)
(74) Mandataire: Korenberg, Alexander Tal

(56) Documents cités:
- EP-A1- 0 214 364
- DE-A1-102006 002 519

## Description

L'invention concerne un compteur de fluide, en particulier d'eau.

Classiquement, un compteur de fluide, en particulier d'eau, comporte une bâche pourvue d'une conduite d'arrivée et d'une conduite de sortie de l'eau et contenant une chambre de mesure, qui peut être à turbine, à piston oscillant ou statique, par exemple à ultrasons. Sur cette bâche est monté et connecté un totalisateur permettant de déterminer le débit ou le volume d'eau traversant la bâche. Ce totalisateur comporte divers éléments électriques, mécaniques et électroniques et est contenu dans un couvercle, en général en matière plastique, qui assure son maintien et qui comporte une fenêtre de visualisation d'un écran de comptage, en général à cristaux liquides.

Ce couvercle est lui-même recouvert d'une coiffe qui porte des marquages spécifiques au compteur, assure une fonction anti-fraude et présente une fenêtre externe de visualisation de l'écran.

Il est connu du document de brevet FR 2 886 009 de monter cette coiffe par translation selon un axe de montage et de fixer cette coiffe au moyen d'une pluralité d'éléments de clippage répartis angulairement sur la périphérie de la paroi interne de la coiffe et un élément périphérique continu de retenue par clippage sur la paroi externe de la bâche.

Ce type de fixation de la coiffe est indémontable sans destruction de la coiffe. S'il assure donc une fonction anti-fraude, il empêche tout démontage de la coiffe sans dégât de cette dernière.

Or, lorsque le totalisateur comporte des éléments électroniques, il est nécessaire de pouvoir accéder à l'intérieur de ce totalisateur pour des raisons de maintenance ou de réparation, par exemple pour changer la batterie d'alimentation électrique. Il est problématique qu'une telle intervention entraîne l'installation systématique d'une nouvelle coiffe. DE 10 2006 002 519 divulgue un capsule de mesure pour un compteur de liquide à flux tangentiel. EP 0 214 364 divulgue un compteur d'eau muni d'un axe de verrouillage inséré à travers une ouverture dans le capot du compteur, afin d'empêcher le retrait non-autorisé du registre du compteur. L'invention résout ce problème en proposant un agencement de fixation de la coiffe qui soit démontable tout en assurant une fonction anti-fraude.

Pour ce faire, l'invention propose un compteur de fluide, en particulier d'eau, comportant un totalisateur présentant des éléments électroniques, ce totalisateur étant recouvert d'un couvercle et ce couvercle étant lui-même recouvert d'une coiffe assurant une fonction anti-fraude, compteur caractérisé en ce que ladite coiffe est fixée audit couvercle au moyen d'au moins un élément de fixation accessible de l'extérieur et dont le démontage nécessite sa destruction. Ledit élément de fixation est un plomb traversant ladite coiffe et clippé dans un orifice dudit couvercle. Ledit plomb est de forme cylindrique creux et comporte une tête venant en appui autour d'un orifice traversant la coiffe, cette tête étant pourvue d'une cavité.

L'agencement selon l'invention est particulièrement simple à monter et peu onéreux. Par ailleurs, la solution de l'invention est particulièrement bien adaptée à une forme en section carrée du couvercle et de la coiffe.

De préférence, le compteur comporte deux dits élément de fixation disposés sur deux faces opposées de ladite coiffe.

L'invention est décrite ci-après plus en détail à l'aide de figures ne représentant qu'un mode de réalisation préféré de l'invention.
La figure 1 est une vue en perspective éclatée d'un compteur conforme à l'invention.
La figure 2 est une vue en coupe d'un compteur conforme à l'invention.
La figure 3 est une vue de détail en coupe d'un compteur conforme à l'invention.

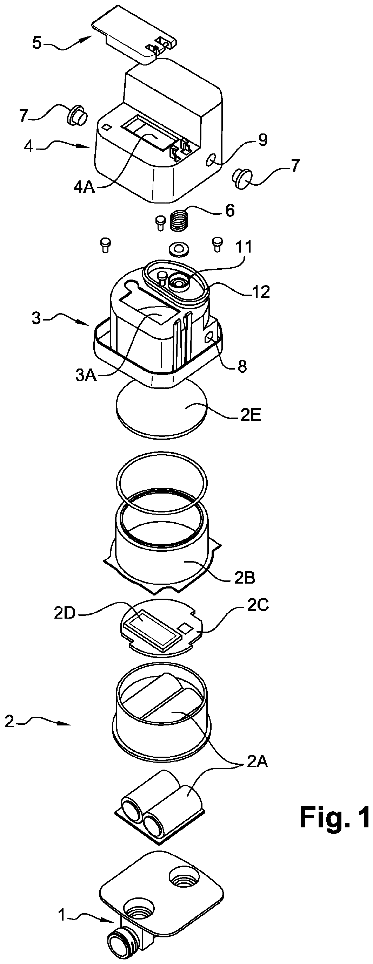

Comme représenté sur la figure 1, un compteur de fluide, en particulier d'eau, comporte une bâche 1 pourvue d'une conduite d'arrivée et d'une conduite de sortie de l'eau et contenant une chambre de mesure, qui peut être à turbine, à piston oscillant ou statique, par exemple à ultrasons. Sur cette bâche 1 est monté et connecté un totalisateur 2 permettant de déterminer le débit ou le volume d'eau traversant la bâche. Ce totalisateur 2 comporte divers éléments électriques, mécaniques et électroniques 2A et est contenu dans un carter 2B, par exemple métallique, et comporte une carte électronique supérieure 2C comportant un écran de comptage 2D et recouverte d'une plaque transparente 2E, en matière plastique ou en verre.

Ce totalisateur 2 est recouvert d'un couvercle 3, en général en matière plastique, qui assure son maintien par vissage sur la bâche, de préférence par quatre vis disposées à ces coins, et qui comporte une fenêtre 3A de visualisation de l'écran 2D. Ce couvercle 3 est donc vissé sur la bâche 1.

Le couvercle 3 est enfin lui-même recouvert d'une coiffe 4 qui porte des marquages spécifiques au compteur, assure une fonction anti-fraude en empêchant l'accès aux vis de fixation du couvercle 3 et présente également une fenêtre, externe, 4A de visualisation de l'écran 2D. Elle peut contenir comme représenté sur la figure 1 une antenne de télérelevé.

Un couvre-écran 5 est monté sur la coiffe 4 pour recouvrir et protéger cet écran des rayons ultra-violets et protéger cette fenêtre externe 4A, afin d'empêcher l'introduction d'éléments extérieurs tels que de la boue ou des poussières.

Selon l'invention, la coiffe 4 est fixée au couvercle 3 au moyen d'au moins un élément de fixation accessible de l'extérieur et dont le démontage nécessite sa destruction.

Selon l'invention, cet élément de fixation est un plomb 7 traversant la coiffe et clippé dans un orifice 8 du couvercle.

De préférence, le compteur comporte deux tels éléments de fixation 7 disposés sur deux faces opposées de la coiffe 4.

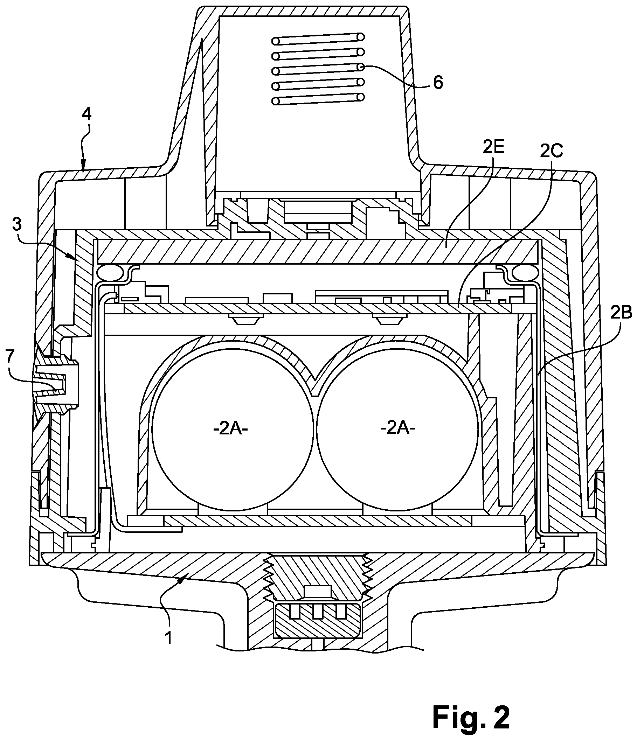

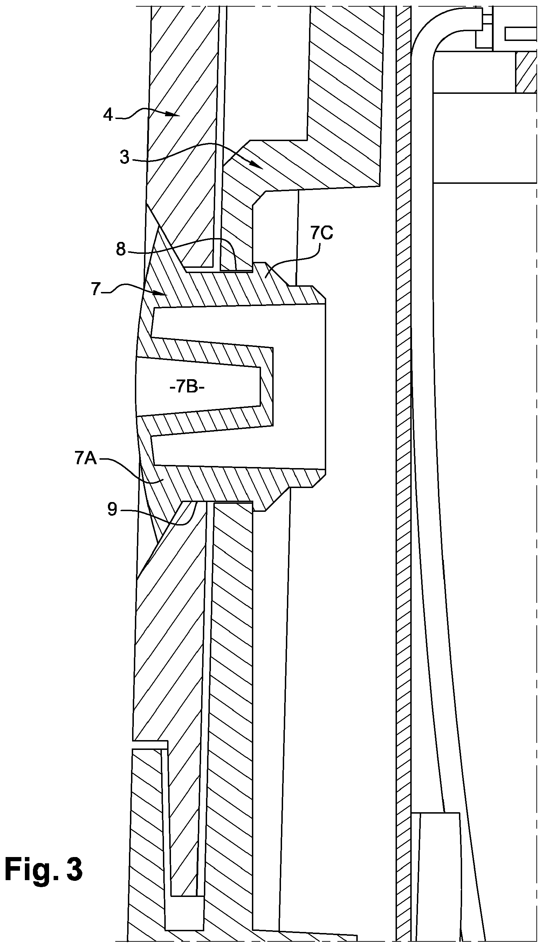

Sur la figure 2, est représenté le compteur en coupe au droit d'un tel plomb 7 et sur la figure 3 est représenté en coupe un tel plomb 7.

Ce plomb 7 est de forme cylindrique creux et comporte une tête 7A venant en appui élastique contre une paroi annulaire biseautée autour d'un orifice 9 traversant la coiffe 4. Cette tête 7A est pourvue d'une cavité 7B.

Il comporte à proximité de son autre extrémité une nervure annulaire 7C de clippage à l'arrière de l'orifice 8 du couvercle 4. Cette rainure présente une paroi biseautée annulaire dans le sens de son insertion.

Le démontage du plomb 7 est réalisé par insertion d'un outil de type tournevis et application d'une certaine force, dans la cavité 7B de sa tête 7A apparente. Le plomb 7 est alors détérioré ce qui permet de démontrer la fraude hors opération de maintenance.

Lors d'opérations de maintenance et donc de démontages volontaires du plomb par un opérateur, le remontage de la coiffe 4 nécessite uniquement le montage de deux plombs 7 neufs.

## Revendications

1. Compteur de fluide, en particulier d'eau, comportant un totalisateur (2) présentant des éléments électroniques, ce totalisateur (2) étant recouvert d'un couvercle (3) et ce couvercle (3) étant lui-même recouvert d'une coiffe (4) assurant une fonction anti-fraude, compteur **caractérisé en ce que** ladite coiffe (4) est fixée audit couvercle (3) au moyen d'au moins un élément de fixation (7) accessible de l'extérieur et dont le démontage nécessite sa destruction, ledit élément de fixation étant un plomb (7) traversant ladite coiffe (4) et clippé dans un orifice (8) dudit couvercle, et ledit plomb (7) étant de forme cylindrique creux et comportant une tête (7A) venant en appui autour d'un orifice (9) traversant la coiffe (4), cette tête (7A) étant pourvue d'une cavité (7B).

2. Compteur selon la revendication 1, **caractérisé en ce que** il comporte deux dits élément de fixation (7) disposés sur deux faces opposées de ladite coiffe (4).

## Patentansprüche

1. Fluidmesser, insbesondere für Wasser, umfassend einen Zähler (2), der elektronische Elemente aufweist, wobei dieser Zähler (2) mit einem Deckel (3) bedeckt ist und dieser Deckel (3) wiederum mit einer Kappe (4) bedeckt ist, die eine Betrugsschutzfunktion gewährleistet, wobei der Messer **dadurch gekennzeichnet ist, dass** die Kappe (4) mittels mindestens eines Befestigungselements (7), das von außen zugänglich ist und dessen Ausbau seine Zerstörung erfordert, am Deckel (3) befestigt ist, wobei das Befestigungselement eine Plombe (7) ist, die die Kappe (4) durchquert und an eine Öffnung (8) des Deckels geklemmt ist, und wobei die Plombe (7) eine hohle zylindrische Form aufweist und einen Kopf (7A) umfasst, der um eine die Kappe (4) durchquerende Öffnung (9) zur Anlage kommt, wobei dieser Kopf (7A) mit einem Hohlraum (7B) versehen ist.

2. Messer nach Anspruch 1, **dadurch gekennzeichnet, dass** er zwei solche Befestigungselemente (7) umfasst, die auf zwei gegenüberliegenden Seiten der Kappe (4) angeordnet sind.

## Claims

1. Fluid meter, particularly water meter, comprising a register (2) exhibiting electronic elements, this register (2) being covered by a cover (3) and this cover (3) being itself covered by a cap (4) that performs an anti-fraud function, the meter being **characterized in that** the said cap (4) is fixed to the said cover (3) by means of at least one fixing element (7) accessible from the outside and the removal of which requires it to be destroyed, the said fixing element being a security seal (7) passing through the said cap (4) and clipped into an orifice (8) of the said cover and the said security seal (7) being of hollow cylindrical shape and comprising a head (7A) that comes to bear around an orifice (9) that passes through the cap (4), this head (7A) being provided with a cavity (7B).

2. Meter according to Claim 1, **characterized in that** it comprises two said fixing elements (7) arranged on two opposite faces of the said cap (4).
